# EUROPEAN PATENT APPLICATION

(11) **EP 3 690 188 A1**
(43) Date of publication of application: **05.08.2020**
(21) Application number: 18862789.7
(22) Date of filing: 27.06.2018
(51) Int. Cl.: F01D 5/14, F01D 9/02, F01D 25/00, F02C 7/00, F04D 29/38, F04D 29/54

(54) **AXIAL FLOW FAN, METHOD FOR MODIFYING COMPRESSOR AND TURBINE BLADE, AND BLADE OBTAINED BY MODIFICATION**

(30) Priority: 29.09.2017 JP 2017191067
(71) Applicant: IHI Corporation, Tokyo 135-8710 (JP)
(72) Inventor: FURUKAWA, Juo, Tokyo 135-8710 (JP); HAMABE, Masaaki, Tokyo 135-8710 (JP)
(74) Representative: MERH-IP Matias Erny Reichl Hoffmann Patentanwälte PartG mbB
(86) International application number: PCT/JP2018/024385
(87) International publication number: WO 2019/064761

(57) **Abstract**

Provided is a blade on which a secondary flow loss is reduced without changing aerodynamic design of a base blade. The blade includes: a base blade part and an elevated portion which is provided on a pressure side in the vicinity of a trailing edge in at least one of a hub region and a tip region of the base blade part, an aerofoil profile in a position in a spanwise direction where the elevated portion is provided is obtained by modifying, to a modified trailing edge portion curve, a trailing edge portion curve of a base aerofoil profile, the modified trailing edge portion curve is constituted of a portion of the trailing edge portion curve of the base aerofoil profile in the position in the spanwise direction where the elevated portion is provided and an elevated portion curve, the portion being further on a side of a suction side curve than the trailing edge, the elevated portion curve is constituted of a concave front side curve and a convex rear side curve, the rear side curve is a part of an ellipse or a circle, and the front side curve is a curve smoothly connecting the rear side curve and a pressure side curve.

## Description

### Technical Field

An embodiment of the present disclosure relates to a method for modifying a blade of a fan, a compressor and a turbine of axial flow type to reduce a secondary flow loss, and a blade obtained by the modification.

### Background Art

A fan, a compressor and a turbine of axial flow type which are components of, for example, a turbofan engine includes one or more stages arranged in an axial direction. Each of the stages is constituted of a rotor cascade formed by arranging rotor blades at equal spaces in a circumferential direction and a stator cascade formed by arranging stator blades at equal spaces in the circumferential direction. Note that in each of the fan and the compressor, the rotor cascade is located on an upstream side of each of the stages, and in the turbine, the stator cascade is located on the upstream side of each of the stages, respectively.

Working fluid (air in the compressor and combustion gas in the turbine) which passes through the blade cascades (the rotor cascade and the stator cascade) flows through inter-blade flow passages respectively formed between adjacent blades. In each of the inter-blade flow passages, an inside in a radial direction is bounded by a flow passage inner wall, an outside in the radial direction is bounded by a flow passage outer wall, and both sides in a circumferential direction are bounded by blade surfaces (a pressure side and a suction side) of adjacent blades, which face each other, respectively. Note that in the rotor cascade, conventionally, a platform of each of the rotor blades constitutes the flow passage inner wall, and a casing (or a tip shroud provided at a tip end of each of the rotor blades) constitutes the flow passage outer wall, respectively. In addition, note that in the stator cascade, conventionally, an inner band of each of the stator blades constitutes the flow passage inner wall, and an outer band of each of the stator blades constitutes the flow passage outer wall, respectively.

Note that in the present description, the term "blade" is used to represent a part of a blade part (aerofoil) of each of the rotor blades or each of the stator blades, instead of the whole of each of the rotor blades or each of the stator blades.

In the meantime, it is ideal that flows in the inter-blade flow passages pass along solid walls which bound peripheral borders of the inter-blade flow passages. Flows (main streams) in portions of the inter-blade flow passages, which are away from the solid walls, become approximate to the above-mentioned ideal flows. However, in portions in the vicinity of the solid walls, due to influence of viscosity, flows which are different from the ideal flows, that is, secondary flows are generated. Note that in the present description, as the secondary flows, the below-described flows are assumed.
(1) Vortices generated such that boundary layers developed along flow passage inner walls and flow passage outer walls collide with leading edges of the blades and are thereby separated (the so-called horseshoe vortices).
(2) Flows generated along the flow passage inner walls and the flow passage outer walls from a pressure side of one of neighboring blades to a suction side of another of the neighboring blades, which face each other, due to a difference between a static pressure in the vicinity of a pressure side of each of the blades and a static pressure in the vicinity of a suction side of each of the blades (the so-called cross flows).
(3) Vortices generated throughout all regions of the inter-blade flow passages by fusion of the horseshoe vortices and the cross flows (the so-called passage vortices).

As a design method for reducing a total pressure loss (secondary flow loss) which is caused by the above-mentioned secondary flows, for example, three-dimensional design of blades has been proposed (For example, refer to Patent Document 1).

The method of the three-dimensional design is a design method in which a position of a cross section of a blade in at least either one of a circumferential direction and an axial direction is changed in a spanwise direction (radial direction). Whereas a line (stacking line) which connects representative points (for example, centroids) of the cross section in positions in the spanwise direction is a straight line in the conventional two-dimensionally designed blade, the above-mentioned line is a curve which curves in at least either one of the circumferential direction and the axial direction in a three-dimensionally designed blade. By having the above-mentioned shape, in the three-dimensionally designed blade, new vortices are generated in flows in inter-blade flow passages in the conventional two-dimensionally designed blade in an intended manner, thereby suppressing secondary flows.

### Related Art Document

### Patent Document

Patent Document 1: Japanese Patent Application Laid-Open No. H5-26004

### Summary of the Invention

### Problems to be solved by the Invention

However, the three-dimensionally designed blade poses the problems in that due to the complicated shape thereof, a lot of time for manufacturing is required, and in addition thereto, designing itself requires a lot of time. In particular, in designing the three-dimensionally designed blade, since a shape thereof which satisfies requirements in aerodynamic design that is a reduction in the secondary flow loss does not necessarily satisfies requirements in structural strength design, in order to obtain a shape which satisfies both the requirements, it is required to vary a shape thereof and to repeatedly conduct aerodynamic analysis and structural strength analysis each time when a shape thereof is changed, and hence, an extremely long time is required.

In view of the above-described problems, the present disclosure has been made. Objects of the present disclosure are to provide a method for modifying a blade, which allows a secondary flow loss to be easily reduced without changing aerodynamic design of a targeted blade and a blade obtained by the modification.

### Means for solving the Problems

In order to solve the above problems, an aspect of the present disclosure is directed to a blade which is applied to a fan, a compressor or a turbine of axial flow type and includes: a base blade part; and an elevated portion being provided on a pressure side in the vicinity of a trailing edge in at least either one of a hub region and a tip region of the base blade part, the base blade part has a base aerofoil profile being constituted of a leading edge portion curve, a trailing edge portion curve being an arc, and a concave pressure side curve and a convex suction side curve in respective positions in a spanwise direction, the concave pressure side curve and the convex suction side curve respectively extending between the leading edge portion curve and the trailing edge portion curve, the blade has a base aerofoil profile in a position in the spanwise direction where the elevated portion is not provided, whereas the blade has a modified aerofoil profile in a position in the spanwise direction where the elevated portion is provided, the modified aerofoil profile is constituted of the leading edge portion curve, the pressure side curve and the suction side curve of the base aerofoil profile in the position in the spanwise direction where the elevated portion is provided, and a modified trailing edge portion curve, the modified trailing edge portion curve is constituted of a portion of the trailing edge portion curve of the base aerofoil profile in the position in the spanwise direction where the elevated portion is provided and an elevated portion curve, the portion being further on a side of the suction side curve than the trailing edge, the elevated portion curve is constituted of a concave front side curve and a convex rear side curve, and the rear side curve is a part of an ellipse or a circle, and the front side curve is a curve smoothly connecting the rear side curve and the pressure side curve.

### Advantageous Effects of the Invention

According to the present disclosure, since only by adding an elevated portion to a base blade, a secondary flow loss can be reduced and it is not required to change aerodynamic design of the base blade, it is made possible to obtain excellent effect in that spending more time in repeatedly conducting aerodynamic analysis and structural strength analysis can be avoided.

### Brief Description of the Drawings

FIG. 1A is a schematic perspective view in which a blade cascade constituted of blades, that is, base blades, targeted for modification made by employing a method according to an embodiment of the present disclosure is viewed from a rear side (downstream side).
FIG. 1B is an enlarged view of a portion T in FIG. 1A and is a perspective view in which a tip region of each of the base blades is viewed from the rear side (downstream side).
FIG. 1C is a diagram illustrating a shape (aerofoil profile) of a cross section of each of the base blades.
FIG. 2A is a graph showing results of analysis of flows in inter-blade flow passages of the blade cascades constituted of the base blades and the blades modified by the method according to the embodiment of the present disclosure and showing distribution of outflow angles in a spanwise direction.
FIG. 2B is a graph showing results of the analysis of the flows in the inter-blade flow passages of the blade cascades constituted of the base blades and the blades modified by the method according to the embodiment of the present disclosure and showing distribution of total pressure loss coefficients in the spanwise direction.
FIG. 3 is a diagram for explaining the concept of modification made by employing the method according to the embodiment of the present disclosure.
FIG. 4A is a diagram for explaining the blade modified by the method according to the embodiment of the present disclosure and is a perspective view (corresponding to FIG. 1B as to the base blade) in which a tip region of a first modified blade is viewed from a rear side (downstream side).
FIG. 4B is a diagram for explaining the blade modified by the method according to the embodiment of the present disclosure and is a perspective view (corresponding to FIG. 1B as to the base blade) in which a tip region of a second modified blade is viewed from the rear side (downstream side).
FIG. 4C is a diagram illustrating an aerofoil profile of the modified blade in a position in the spanwise direction where an elevated portion is not provided.
FIG. 4D is a diagram illustrating an aerofoil profile of the modified blade in a position in the spanwise direction where the elevated portion is provided.
FIG. 5A is a diagram for explaining a modified trailing edge portion curve constituting a modified aerofoil profile (enlarged view of a portion Z in FIG. 4D) and showing a case where a rear side curve constituting an elevated portion curve of the modified trailing edge portion curve is an ellipse.
FIG. 5B is a diagram for explaining the modified trailing edge portion curve constituting the modified aerofoil profile (enlarged view of the portion Z in FIG. 4D) and showing a case where the rear side curve constituting the elevated portion curve of the modified trailing edge portion curve is an ellipse.
FIG. 5C is a diagram for explaining the modified trailing edge portion curve constituting the modified aerofoil profile (enlarged view of the portion Z in FIG. 4D) and showing a case where the rear side curve constituting the elevated portion curve of the modified trailing edge portion curve is a circle.
FIG. 6 is a graph showing distribution of heights of a tip-side elevated portion in the spanwise direction as to the blade modified by the method according to the embodiment of the present disclosure.

### Mode for carrying out the Invention

Hereinafter, an embodiment of the present disclosure will be described in detail with reference to the accompanying drawings.

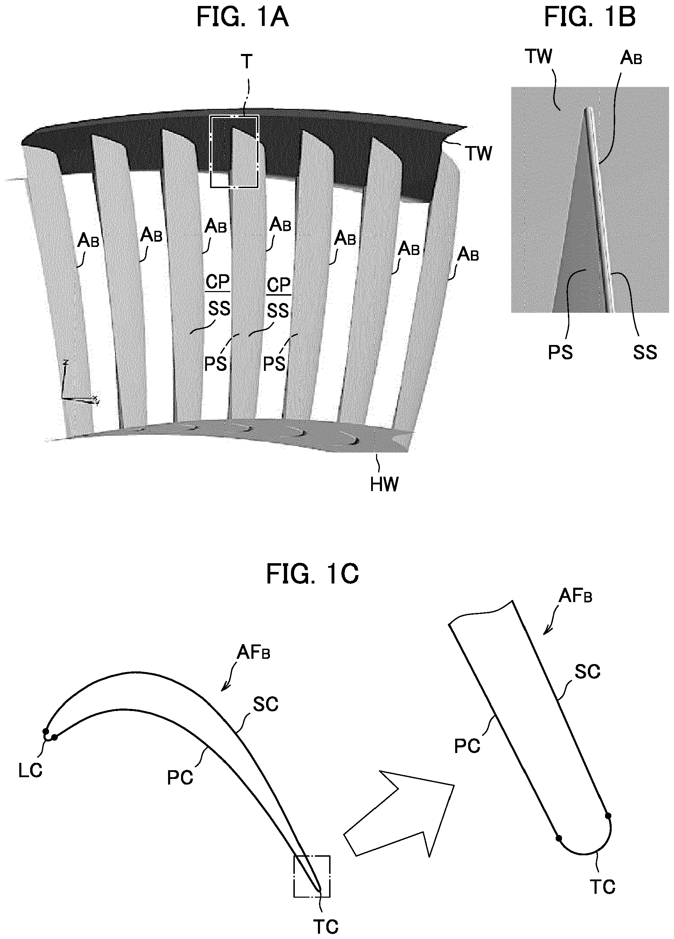

Each of FIG. 1A to FIG. 1C is a diagram for explaining a blade which is targeted for modification made by employing a method according to the embodiment of the present disclosure, that is, a base blade A_{B}. FIG. 1A is a schematic perspective view in which a blade cascade constituted of base blades A_{B} is viewed from a rear side (downstream side). FIG. 1B is an enlarged view of a portion T in FIG. 1A and a perspective view in which a tip region of each of the base blades A_{B} is viewed from the rear side (downstream side). FIG. 1C is a diagram illustrating a shape (aerofoil profile) of a cross section of each of the base blades A_{B}. Note that herein, a case where the base blades A_{B} are stator blades of a low-pressure turbine included in a turbofan engine is described as an example.

Here, although in general, the term "aerofoil profile" is used to represent a shape of a certain cross section of the blade (that is, a single shape), in the present description, the term "aerofoil profile" is used to represent a set of shapes of a cross section of the blade, which has predetermined features. The terms "base aerofoil profile" and "modified aerofoil profile" described later are also used in the above-described meaning.

As shown in FIG. 1A, the base blades A_{B} are arranged between a flow passage outer wall TW and a flow passage inner wall HW at equal spaces in a circumferential direction, thereby constituting the blade cascade. At this time, between blade surfaces of respective adjacent base blades A_{B} which face each other (pressure side PS and suction side SS), inter-blade flow passages CP are formed, respectively.

Here, each of the base blades A_{B} is a blade which is designed by employing any technique and may be either of a two-dimensionally designed blade or a three-dimensionally designed blade. In addition, each of the base blades A_{B} is not limited to a newly designed blade, and the existing blade can also be each of the base blades A_{B}.

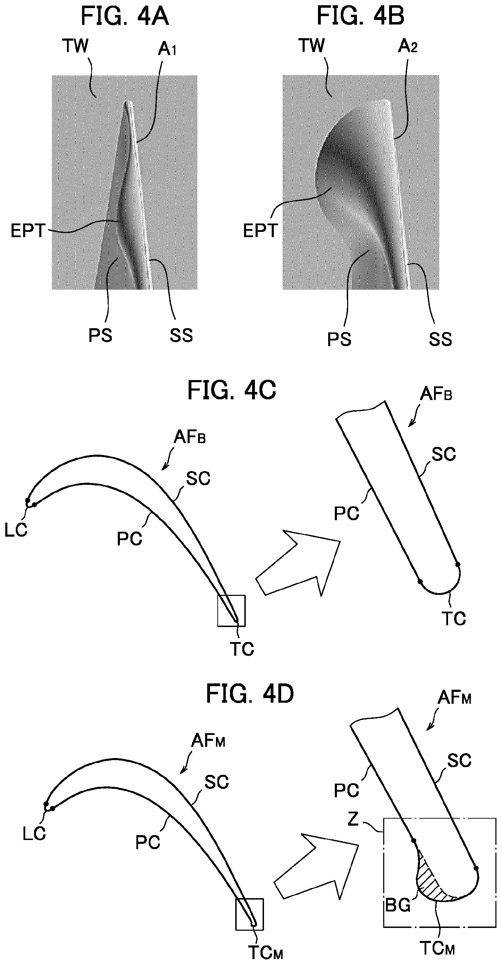

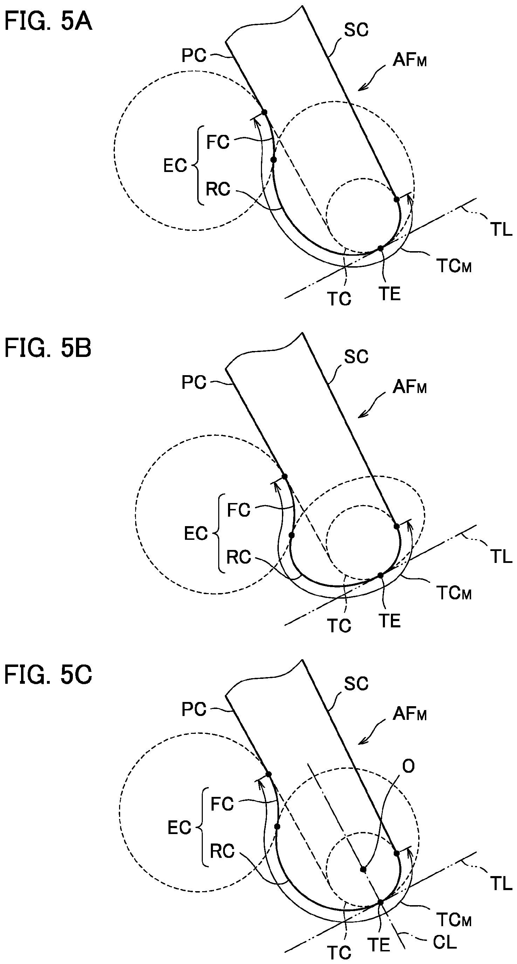

In addition, each of the base blades A_{B} has a base aerofoil profile AF_{B} having the following features as to a combination of constituent curves in respective positions in a spanwise direction. Specifically, as shown in FIG. 1C, the base aerofoil profile AF_{B} is constituted of a leading edge portion curve LC, a trailing edge portion curve TC, and a concave pressure side curve PC and a convex suction side curve SC which respectively extend between the leading edge portion curve LC and the trailing edge portion curve TC. The trailing edge portion curve TC is formed to be an arc. Note that in FIG. 1C, respective end portions of the above-described curves (in other words, connecting portions of respective two adjacent curves) are indicated by dots for the sake of convenience (also in the FIG. 4C and FIG. 4D and FIG. 5A to FIG. 5C described later).

As described above, the base blades A_{B} have the aerofoil profiles (base aerofoil profiles AF_{B}) which are the same as one another in all positions in the spanwise direction. In other words, also in tip regions, one of which is illustrated in FIG. 1B, the base blades A_{B} have the aerofoil profiles (base aerofoil profiles AF_{B}) which are the same as aerofoil profiles of other regions (that is, hub regions).

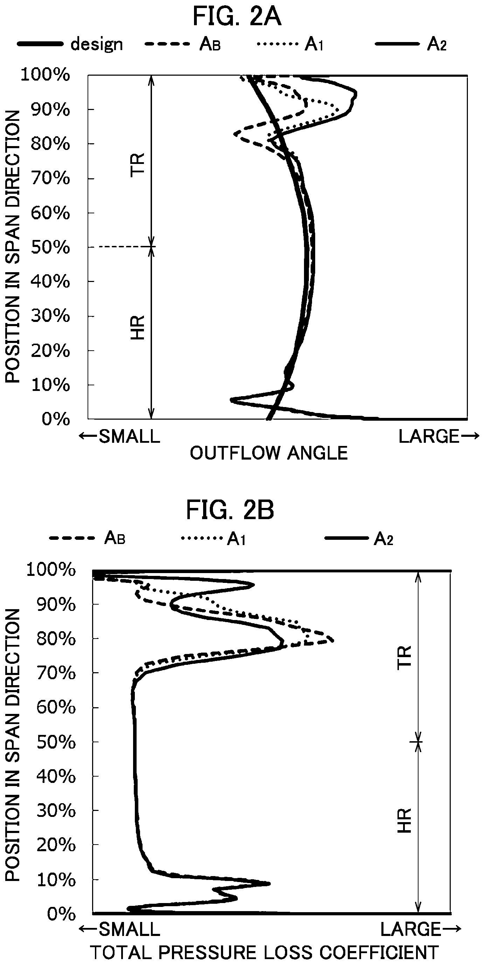

Flows in the inter-blade flow passages CP of the blade cascade constituted of these base blades A_{B} were analyzed by employing CFD (Computational Fluid Dynamics) with influence of viscosity taken into account, and distribution of outflow angles and total pressure loss coefficients in a spanwise direction were obtained. The obtained results are shown in FIG. 2A and FIG. 2B.

Here, in FIG. 2A, the distribution of the outflow angles in the spanwise direction at an exit of the blade (a position downstream at a distance corresponding to 10% of a chord length (a length of a line segment connecting a leading edge and a trailing edge)) is shown, and in FIG. 2B, the distribution of the total pressure loss coefficients in the spanwise direction is shown. Note that positions in the spanwise direction which are plotted on a vertical axis in each of FIG. 2A and FIG. 2B are shown as dimensionless values (which are shown by percentages in each of the graphs) obtained by dividing heights of the blade measured from a hub side end portion by an overall height (a height from the hub side end portion to a tip side end portion).

As shown in FIG. 2A, at an approximately 5% span position of the hub region HR and an approximately 83% span position of the tip region TR, outflow angles of the base blade A_{B} are significantly smaller than designed values (indicated by line "design"). This is because due to influence of secondary flows generated respectively in the vicinity of the flow passage inner wall and the flow passage outer wall, turning (curving) of flows in the inter-blade flow passages CP cannot be obtained unlike the assumption upon designing, thereby locally reducing the outflow angles. In addition, as shown in FIG. 2B, at the above-described positions in the spanwise direction, a peak (maximum value) of the total pressure loss coefficient has appeared, and this is because due to the above-described influence of secondary flows, a large secondary flow loss is caused.

Note that in the present description, regions of 0% to 50% and 50% to 100% of an overall span as distances from the hub side end portion are defined as the hub region HR and the tip region TR, respectively.

As described above, in order to reduce the secondary flow losses generated in the hub region HR and the tip region TR, it is effective to make the outflow angles, which are locally reduced due to the secondary flows, approximate to the designed values, that is, to increase the outflow angles.

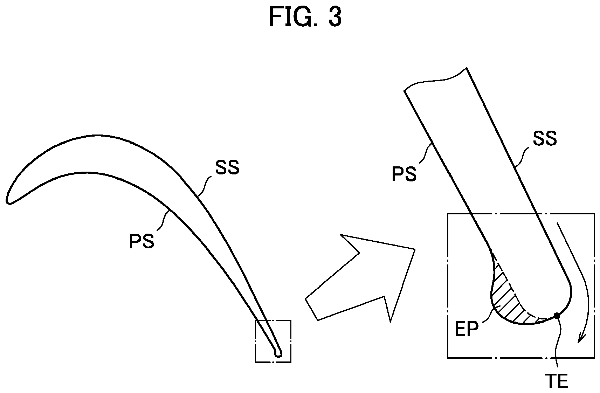

Therefore, in the method for modifying the blade according to the embodiment of the present disclosure, around a position in the spanwise direction, in which the outflow angle is lower than the designed value and is minimum, an elevated portion is provided on a pressure side in the vicinity of a trailing edge of a base blade. The concept of such modification is shown in FIG. 3.

As shown in FIG. 3, it is considered that by providing an elevated portion EP on a pressure side PS in the vicinity of a trailing edge TE, owing to a kind of the Coanda effect, flows on a side of a suction side SS proceed along a trailing edge portion of the elevated portion EP and enter a side of the pressure side PS as indicated by an arrow, and the turning (curving) of the flows becomes large, thereby resulting in an increase in the outflow angle.

Next, a blade A which is obtained by modifying the base blade A_{B} by employing the above-described method will be described in detail with reference to FIG. 4A to FIG. 4D.

FIG. 4A and FIG. 4B are perspective views in which tip regions of a first modified blade A₁ and a second modified blade A₂ are viewed from rear sides (downstream sides), respectively and correspond to FIG. 1B as to the base blade A_{B}. In addition, FIG. 4C shows an aerofoil profile of each of the modified blades in the position in the spanwise direction where the elevated portion is not provided, and FIG. 4D shows an aerofoil profile of each of the modified blades in the position in the spanwise direction where the elevated portion is provided.

As shown in FIG. 4A and FIG. 4B, each of the blades A (the first modified blade A₁ and the second modified blade A₂) has a shape with a tip-side elevated portion EPT added on a pressure side PS in the vicinity of a trailing edge of the base blade A_{B}, in a tip region. Note that differences between shapes of the tip-side elevated portions EPT of the first modified blade A₁ and the second modified blade A₂ will be described later.

In addition, each of the blades A may have a hub-side elevated portion EPH, which is similar to the tip-side elevated portion EPT, in a hub region in addition to in the tip region (hereinafter, the tip-side elevated portion EPT and the hub-side elevated portion EPH are collectively referred to as an elevated portion EP).

Further, each of the blades A may have either one of the tip-side elevated portion EPT or the hub-side elevated portion EPH.

Note that in each of the blades A, which is obtained by adding the elevated portion EP to the base blade A_{B}, the base blades A_{B} has become a part of each of the blades A and is not an independent blade. Accordingly, when a configuration of each of the blades A is described, the term, a base blade part A_{B}, is also used. In this case, it can be said that the above-described analysis by employing the CFD is targeted for a blade cascade which is constituted of only the base blade parts A_{B} (excluding the elevated portions EP) alone of each of the blades A.

As shown in FIG. 4C, each of the blades A has (the same aerofoil profile as) a base aerofoil profile AF_{B} in the position in the spanwise direction in which the elevated portion EP is not provided.

On the other hand, in the position in the spanwise direction in which the elevated portion EP is provided, each of the blades A has a modified aerofoil profile AF_{M} having the following features as to a combination of constituent curves. Specifically, as shown in FIG. 4D, the modified aerofoil profile AF_{M} is constituted of a leading edge portion curve LC, a modified trailing edge portion curve TC_{M}, a concave pressure side curve PC and a convex suction side curve SC which respectively extend between the leading edge portion curve LC and the modified trailing edge portion curve TC_{M}. Here, the leading edge portion curve LC, the pressure side curve PC (only a portion thereof ahead of a connecting point with the later-described modified trailing edge portion curve TC_{M}), and the suction side curve SC of the modified aerofoil profile AF_{M} are the same curves as the leading edge portion curve LC, the pressure side curve PC, and the suction side curve SC of the base aerofoil profile AF_{B} in the corresponding positions in the spanwise direction.

Next, hereinafter, with reference to FIG. 5A to FIG. 5C, each of which is an enlarged view of a portion Z in FIG. 4D, the modified trailing edge portion curve TC_{M} will be described in detail. Note that in each of FIG. 5A to FIG. 5C, the curve constituting the base aerofoil profile AF_{B} is indicated by a long dashed line, and the curve constituting the modified aerofoil profile AF_{M} is indicated by a solid line, and portions in which both the curves of the base aerofoil profile AF_{B} and the modified aerofoil profile AF_{M} are the same as each other are indicated by solid lines.

As shown in each of FIG. 5A to FIG. 5C, with a trailing edge TE as a boundary, a side of a suction side curve SC of the modified trailing edge portion curve TC_{M} is configured as the same curve as the trailing edge portion curve TC of the base aerofoil profile AF_{B}, that is, the arc, and a side of a pressure side curve PC is configured as an elevated portion curve EC.

The elevated portion curve EC is constituted of a concave front side curve FC and a convex rear side curve RC.

The rear side curve RC can be a part of an ellipse or a circle and may be configured in any of manners shown in (1) to (3).
(1) The rear side curve RC is a part of the ellipse, and the ellipse satisfies the following conditions: an endpoint of a major axis is the trailing edge TE; and the major axis is orthogonal to a virtual straight line TL which is tangent to the trailing edge portion curve TC (arc) of the base aerofoil profile AF_{B} at the trailing edge TE; and a minor diameter is larger than a diameter of the arc constituting the trailing edge portion curve TC of the base aerofoil profile AF_{B} (see FIG. 5A).
(2) The rear side curve RC is a part of the ellipse, and the ellipse satisfies the following conditions: an endpoint of a minor axis is the trailing edge TE; and the minor axis is orthogonal to a virtual straight line TL which is tangent to the trailing edge portion curve TC (arc) of the base aerofoil profile AF_{B} at the trailing edge TE; and a major diameter is larger than a diameter of the arc constituting the trailing edge portion curve TC of the base aerofoil profile AF_{B} (see FIG. 5B).
(3) The rear side curve RC is a part of the circle, and the circle satisfies the following conditions: a center of the circle is located on a straight line CL which passes through a center O of the arc constituting the trailing edge portion curve TC of the base aerofoil profile AF_{B} and the trailing edge TE; and a diameter is larger than a diameter of the arc constituting the trailing edge portion curve TC of the base aerofoil profile AF_{B} (see FIG. 5C).

However, for the rear side curve RC in each of the tip-side elevated portion EPT and the hub-side elevated portion EPH, only one of the above-mentioned (1) to (3) is selected. In other words, in each of the tip-side elevated portion EPT and the hub-side elevated portion EPH, the manner in which the curve constituting the rear side curve RC is configured (as to which one of the above-mentioned (1) to (3)) is invariable in the spanwise direction.

On the other hand, as long as the front side curve FC is a curve which smoothly connects the pressure side curve PC of the base aerofoil profile AF_{B} and the above-described rear side curve RC, the front side curve FC may be any curve. As one example, as shown in FIG. 5A to FIG. 5C, the front side curve FC can be a part of a circle (that is, an arc) which is tangent to both the pressure side curve PC of the base aerofoil profile AF_{B} and the rear side curve RC.

By the elevated portion curve EC configured as described above, as compared with the base aerofoil profile AF_{B}, the modified aerofoil profile AF_{M} comes to have a bulging portion BG toward a side of the pressure side in the vicinity of the trailing edge TE (see FIG. 4D). This bulging portion BG in the modified aerofoil profile AF_{M} corresponds to the elevated portion EP added to the base blade A_{B}.

Here, a shape parameter or parameters of the rear side curve RC constituting the modified trailing edge portion curve TC_{M} of the modified aerofoil profile AF_{M} (the major diameter and the minor diameter in the case of the ellipse and the diameter in the case of the circle) is or are selected in consideration of conditions of a shape of the base aerofoil profile AF_{B} and conditions of flows around the base blade A_{B} (Reynolds number and the like) so as to obtain desired effect as to the increase in each of the outflow angles. In addition, the shape parameters are representative parameters of the height of the elevated portion EP (a bulging amount of the blade A in a thickness direction), and by continuously changing this or these in the spanwise direction, the elevated portion EP whose height smoothly changes in the spanwise direction can be obtained. Note that a shape parameter of the front side curve FC (the diameter in the case where the front side curve FC is configured as the arc) is selected such that a flow in a local concave portion formed by the front side curve FC becomes smooth.

Next, as to the two kinds of modified blades (the above-described first modified blade A₁ and second modified blade A₂) whose distributions of heights of the elevated portions EP in the spanwise directions are different from each other, effect attained by the modification was verified. Note that here, for the sake of simplicity, a case where as the elevated portion EP, only the tip-side elevated portion EPT was applied was examined.

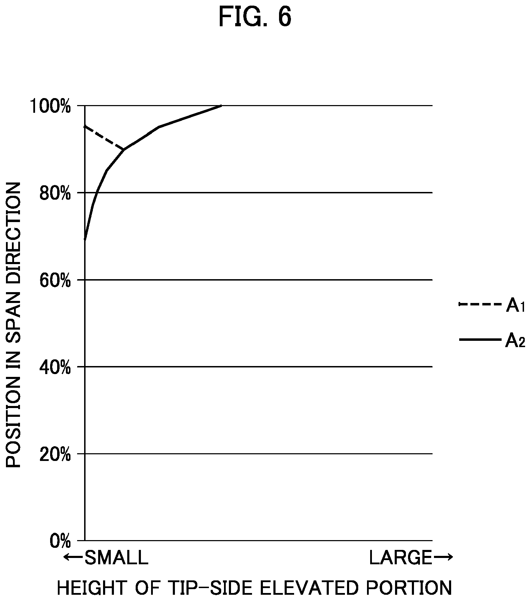

FIG. 6 is a graph showing distributions of heights of the tip-side elevated portions EPT in the spanwise directions in the two kinds of modified blades.

The height of the tip-side elevated portion EPT of the first modified blade A₁ is maximum at an approximately 90% span position and smoothly decreases up to zero on both sides thereof. This intends that at a position in the spanwise direction in the base blade A_{B} where an outflow angle is smaller than the designed value and becomes minimum, the height of the tip-side elevated portion EPT is made maximum. A shape of the tip-side elevated portion EPT of the first modified blade A₁ configured as described above is as shown in FIG. 4A.

On the other hand, the height of the tip-side elevated portion EPT of the second modified blade A₂ is zero at a 70% span position of the tip region TR and gradually increases therefrom toward an outer end (100% span position) of the tip region TR. This assumes a simplified model in which the influence of the secondary flows increases in accordance with an increase in proximity to the flow passage outer wall. A shape of the tip-side elevated portion EPT of the second modified blade A₂ configured as described above is as shown in FIG. 4B.

Flows in the inter-blade flow passages of blade cascades constituted of the above-described first modified blade A₁ and second modified blade A₂ were analyzed by using the CFD with the influence of viscosity taken into account, and the distributions of outflow angles and the total pressure loss coefficients in the spanwise directions were obtained. The obtained results are shown in FIG. 2A and FIG. 2B, as compared with results of similar analysis as to the base blade.

As to the first modified blade A₁, it is seen that by adding the tip-side elevated portion EPT having the height which becomes maximum at an approximately 90% span position, an outflow angle increases and becomes a substantially designed value in the span position where the outflow angle of the base blade A_{B} is significantly smaller than the designed value (see FIG. 2A). In addition, it was confirmed that in conjunction therewith, a peak (maximum value) of a total pressure loss coefficient at the above-mentioned span position becomes smaller than that of the base blade A_{B} and a secondary flow loss generated in this region is reduced (see FIG. 2B).

On the other hand, as to the second modified blade A₂, it is seen that whereas an outflow angle becomes the substantially designed value at an approximately 83% span position, the outflow angle is significantly larger than the designed value at an approximately 90 to 95% span position (see FIG. 2A). It was confirmed that in conjunction therewith, as in the first modified blade A₁, whereas a peak (maximum value) of the total pressure loss coefficient at an approximately 83% span position becomes small, a peak (maximum value) of the total pressure loss coefficient, which is not present for the first modified blade A₁, appears at an approximately 95% span position and the additional secondary flow loss was generated in this region (see FIG. 2B).

It is considered that the reason why as to the second modified blade A₂, the above-described results were obtained is that since the height of the tip-side elevated portion EPT gradually increases from a 70% span position to a 100% span position, the outflow angle at the approximately 90 to 95% span position where the outflow angle as to the base blade A_{B} is larger than the designed value further increases, discrepancy from the designed value increases, and a large secondary flow loss is generated.

As described above, it was confirmed that as to both the first modified blade A₁ and the second modified blade A₂, the elevated portion provided on the pressure side in the vicinity of the trailing edge has effect to increase the outflow angle. It is inferred from this result that by providing the elevated portion on the suction side, instead of the pressure side in the vicinity of the trailing edge, contrary to the above-mentioned result, effect to decrease the outflow angle is obtained.

Accordingly, it is inferred that by providing the elevated portion on the suction side in the vicinity of the trailing edge in a region in the spanwise direction where the outflow angle is larger than the designed value and becomes maximum, the outflow angle in the above-mentioned region can be decreased to be made approximate to the designed value and the secondary flow loss can be reduced. Note that in this case, as a modified aerofoil profile at the position in the spanwise direction at which the elevated portion is provided, a modified aerofoil profile in which on the modified trailing edge portion curve TC_{M} of the modified aerofoil profile AF_{M} which is described with reference to FIG. 4D, a side of the pressure side and a side of the suction side are replaced with each other can be applied.

When the above-described modification made by employing the method according to the embodiment of the present disclosure is applied to a newly designed base blade A_{B}, a blade which has a configuration in which at least one of the hub-side elevated portion EPH and the tip-side elevated portion EPT is added to the base blade A_{B} is newly manufactured by employing any method, thereby allowing a modified blade A to be obtained. Of course, in addition thereto, a base blade A_{B} is newly manufactured by employing any method, and at least either one of the hub-side elevated portion EPH and the tip-side elevated portion EPT is added by employing an appropriate method such as welding, thereby allowing the modified blade A to be obtained.

In addition, when the existing blade is applied as the base blade A_{B} which is modified by employing the method according to the embodiment of the present disclosure, the latter of the above-described two methods may be adopted.

In the above description, as the way of obtaining the distribution of outflow angles in the spanwise direction as to the base blade A_{B}, the analysis of the flows in the inter-blade flow passages by employing the CFD with the influence of viscosity taken into account is presented. However, for example, when the existing blade is applied as the base blade A_{B}, if it is deemed that convenience is higher than that of the analysis by the CFD, a blade cascade test using the above-mentioned existing blades may be conducted and the distribution of outflow angles in the spanwise direction may be obtained by actual measurement.

Here, the method for modifying the blade according to the embodiment of the present disclosure is marshaled. The method includes the following steps.
(1) A step of determining a base blade A_{B} targeted for the modification. Here, the base blade A_{B} has a base aerofoil profile AF_{B} which is constituted of a leading edge portion curve LC, a trailing edge portion curve TC which is an arc, and a concave pressure side curve PC and a convex suction side curve SC which respectively extend between the leading edge portion curve LC and the trailing edge portion curve TC in respective positions in a spanwise direction.
(2) A step of determining a position in the spanwise direction where an elevated portion EP is to be provided, the elevated portion EP being provided on a pressure side PS in the vicinity of a trailing edge TE in at least either one of a hub region HR and a tip region TR of the base blade A_{B}, in order to reduce a secondary flow loss of the base blade A_{B}.
(3) A step of modifying an aerofoil profile of the base blade A_{B} in the position in the spanwise direction where the elevated portion EP is to be provided, from a base aerofoil profile AF_{B} to a modified aerofoil profile AF_{M}. Here, the modified aerofoil profile AF_{M} is obtained by modifying, to a modified trailing edge portion curve TC_{M}, the trailing edge portion curve TC of the base aerofoil profile AF_{B} in the position in the spanwise direction where the elevated portion EP is to be provided. A portion of the above-mentioned modified trailing edge portion curve TC_{M} on a side of the suction side curve SC with the trailing edge TE as a boundary is formed to be the same curve as the trailing edge portion curve TC of the base aerofoil profile AF_{B} in the position in the spanwise direction where the elevated portion EP is to be provided, that is, an arc, and a portion of the modified trailing edge portion curve TC_{M} on a side of the pressure side curve PC is formed to be the elevated portion curve EC. The above-mentioned elevated portion curve EC includes the concave front side curve FC and the convex rear side curve RC.

Here, the rear side curve RC and the front side curve FC are defined as follows.
- The rear side curve RC is any of the following (A) to (C).
   (A) A part of an ellipse whose endpoint of a major axis is the trailing edge TE, whose major axis is orthogonal to a virtual straight line TL which is tangent to the trailing edge portion curve TC of the base aerofoil profile AF_{B} at the trailing edge TE, and whose minor diameter is larger than a diameter of the arc constituting the trailing edge portion curve TC of the base aerofoil profile AF_{B}.
   (B) A part of an ellipse whose endpoint of a minor axis is the trailing edge TE, whose minor axis is orthogonal to a virtual straight line TL which is tangent to the trailing edge portion curve TC of the base aerofoil profile AF_{B} at the trailing edge TE, and whose major diameter is larger than a diameter of the arc constituting the trailing edge portion curve TC of the base aerofoil profile AF_{B}.
   (C) A part of a circle whose center is located on a straight line which passes through a center of the arc constituting the trailing edge portion curve TC of the base aerofoil profile AF_{B} and the trailing edge TE and whose diameter is larger than a diameter of the arc constituting the trailing edge portion curve TC of the base aerofoil profile AF_{B}.
- The front side curve FC is a curve which smoothly connects the rear side curve RC and the pressure side curve PC.

In addition, the determination of the position in the spanwise direction where the elevated portion EP is to be provided in the step (2) is performed as follows.
(2-1) As to a base blade cascade constituted of base blades A_{B}, by employing the analysis of flows in inter-blade flow passages by the CFD with the influence of viscosity taken into account or the actual measurement in the blade cascade test, distribution of outflow angles in the spanwise direction is obtained.
(2-2) Positions in the spanwise direction where the outflow angles obtained in (2-1) are smaller than a designed value and are minimum are obtained.
(2-3) Distribution of heights of the elevated portion EP in the spanwise direction is determined as distribution of heights which includes a maximum height and heights smoothly decreasing up to zero on both sides of the above-mentioned positions in the spanwise direction obtained in (2-2). In the above-mentioned distribution, the positions in the spanwise direction where heights of the elevated portion EP are not zero are positions in the spanwise direction where the elevated portion EP is to be provided.

Note that the distribution of the heights of the elevated portion EP in the spanwise direction is realized by distributing shape parameters of the rear side curve RC (the minor diameter of the ellipse in the case of the above-mentioned (A), the major diameter of the ellipse in the case of the above-mentioned (B), and the diameter of the circle in the case of the above-mentioned (C)) in the spanwise direction.

In addition, a shape of the blade A modified by the above-described method is marshaled as follows.
- The shape is constituted of the base blade part A_{B} and the elevated portion EP on the pressure side PS in the vicinity of the trailing edge TE in at least either one of the hub region HR and the tip region TR of the base blade part A_{B}.
- The base blade part A_{B} has the base aerofoil profile AF_{B} which is constituted of the leading edge portion curve LC, the trailing edge portion curve TC which is the arc, and the concave pressure side curve PC and the convex suction side curve SC which respectively extend between the leading edge portion curve LC and the trailing edge portion curve TC in the respective positions in the spanwise direction.
- The blade A has the base aerofoil profile AF_{B} in the position in the spanwise direction where the elevated portion EP is not provided, whereas the blade A has the modified aerofoil profile AF_{M} in the position in the spanwise direction where the elevated portion EP is provided.
- The modified aerofoil profile AF_{M} is constituted of the leading edge portion curve LC, the pressure side curve PC, and the suction side curve SC of the base aerofoil profile AF_{B} in the positions in the spanwise direction where the elevated portion EP is provided and the modified trailing edge portion curve TC_{M}.
- The modified trailing edge portion curve TC_{M} is constituted of the portion of the trailing edge portion curve TC of the base aerofoil profile AF_{B} in the position in the spanwise direction, where the elevated portion EP is provided and the elevated portion curve EC, the portion being further on the side of the suction side curve SC than the trailing edge TE.
- The elevated portion curve EC is constituted of the concave front side curve FC and the convex rear side curve RC.

Here, the rear side curve RC and the front side curve FC are respectively defined as follows.
- The rear side curve RC is any of the following (A) to (C).
   (A) The part of the ellipse whose endpoint of the major axis is the trailing edge TE, whose major axis is orthogonal to the virtual straight line TL which is tangent to the trailing edge portion curve TC of the base aerofoil profile AF_{B} at the trailing edge TE, and whose minor diameter is larger than the diameter of the arc constituting the trailing edge portion curve TC of the base aerofoil profile AF_{B}.
   (B) The part of the ellipse whose endpoint of the minor axis is the trailing edge TE, whose minor axis is orthogonal to the virtual straight line TL which is tangent to the trailing edge portion curve TC of the base aerofoil profile AF_{B} at the trailing edge TE, and whose major diameter is larger than the diameter of the arc constituting the trailing edge portion curve TC of the base aerofoil profile AF_{B}.
   (C) The part of the circle whose center is located on the straight line which passes through the center of the arc constituting the trailing edge portion curve TC of the base aerofoil profile AF_{B} and the trailing edge TE and whose diameter is larger than the diameter of the arc constituting the trailing edge portion curve TC of the base aerofoil profile AF_{B}.
- The front side curve FC is the curve which smoothly connects the rear side curve RC and the pressure side curve PC.

In addition, the heights of the elevated portion EP are distributed such that a maximum height appears in the position in the spanwise direction where the outflow angle of the blade cascade constituted of only the base blades A_{B} alone is smaller than the designed value and becomes minimum, and heights on both sides of the distribution smoothly decrease up to zero.

When in order to reduce the secondary flow loss of the base blade, aerodynamic design is changed, it is required to conduct again structural strength analysis for the changed shape of the base blade and to confirm that the above-mentioned shape satisfies requirements on structural strength design. When the changed shape does not satisfy the requirements on the structural strength design, in order to obtain a shape which satisfies both of requirements on the aerodynamic design (that is, a reduction in the secondary flow loss) and the requirements on the structural strength design, it is required to vary a shape thereof and to repeatedly conduct the aerodynamic analysis and the structural strength analysis each time when the shape thereof is changed, and hence, an extremely long time is required.

In contrast to this, by employing the above-described method for modifying the blade according to the embodiment of the present disclosure, since the secondary flow loss can be reduced only by adding the elevated portion to the base blade and it is not required to change the aerodynamic design of the base blade, it is made possible to avoid spending more time in repeatedly conducting the aerodynamic analysis and the structural strength analysis.

In addition, the above-described method for modifying the blade according to the embodiment of the present disclosure is applicable to not only the newly designed blade but also the existing blade.

### (Aspects of the Present Disclosure)

A blade according to a first aspect of the present disclosure is applied to a fan, a compressor, or a turbine of axial flow type and includes: a base blade part; and an elevated portion being provided on a pressure side in a vicinity of a trailing edge in at least either one of a hub region and a tip region of the base blade part, the base blade part has a base aerofoil profile being constituted of a leading edge portion curve, a trailing edge portion curve being an arc, and a concave pressure side curve and a convex suction side curve in respective positions in a spanwise direction, the concave pressure side curve and the convex suction side curve respectively extending between the leading edge portion curve and the trailing edge portion curve, the blade has a base aerofoil profile in a position in the spanwise direction where the elevated portion is not provided, whereas the blade has a modified aerofoil profile in a position in the spanwise direction where the elevated portion is provided, the modified aerofoil profile is constituted of the leading edge portion curve, the pressure side curve and the suction side curve of the base aerofoil profile in the position in the spanwise direction where the elevated portion is provided, and a modified trailing edge portion curve, the modified trailing edge portion curve is constituted of a portion of the trailing edge portion curve of the base aerofoil profile in the position in the spanwise direction where the elevated portion is provided and an elevated portion curve, the portion being further on a side of the suction side curve than the trailing edge, the elevated portion curve is constituted of a concave front side curve and a convex rear side curve, and the rear side curve is a part of an ellipse or a circle, and the front side curve is a curve smoothly connecting the rear side curve and the pressure side curve.

On the blade according to a second aspect of the present disclosure, the rear side curve is a part of an ellipse whose endpoint of a major axis is the trailing edge, whose major axis is orthogonal to a virtual straight line being tangent to the trailing edge portion curve of the base aerofoil profile at the trailing edge, and whose minor diameter is larger than a diameter of an arc constituting the trailing edge portion curve of the base aerofoil profile, or a part of an ellipse whose endpoint of a minor axis is the trailing edge, whose minor axis is orthogonal to a virtual straight line being tangent to the trailing edge portion curve of the base aerofoil profile at the trailing edge, and whose major diameter is larger than a diameter of an arc constituting the trailing edge portion curve of the base aerofoil profile, or a part of a circle whose center is located on a straight line which passes through a center of an arc constituting the trailing edge portion curve of the base aerofoil profile and the trailing edge and whose diameter is larger than a diameter of an arc constituting the trailing edge portion curve of the base aerofoil profile.

On the blade according to a third aspect of the present disclosure, the elevated portion has heights being distributed in a spanwise direction such that a height among the heights becomes maximum in a position in the spanwise direction where an outflow angle of a blade cascade becomes minimum and heights on both sides of distribution of the heights smoothly decrease up to zero, the blade cascade being constituted of only the base blade parts alone.

On the blade according to a fourth aspect of the present disclosure, the hub region is a region of 0 to 50% of an overall span of the base blade part as a distance from a hub side end portion of the base blade part, and the tip region is a region of 0 to 50% of the overall span of the base blade part as a distance from a tip side end portion of the base blade part.

In addition, a method for modifying a blade according to a first aspect of the present disclosure is applied to a blade of a fan, a compressor, or a turbine of axial flow type, the method including:
(1) a step of determining a base blade being targeted for modification, the base blade having a base aerofoil profile being constituted of a leading edge portion curve, a trailing edge portion curve being an arc, and a concave pressure side curve and a convex suction side curve in respective positions in a spanwise direction, the concave pressure side curve and the convex suction side curve respectively extending between the leading edge portion curve and the trailing edge portion curve; (2) a step of determining a position in the spanwise direction where an elevated portion is to be provided, the elevated portion being to be provided on a pressure side in a vicinity of a trailing edge in at least either one of a hub region and a tip region of the base blade in order to reduce a secondary flow loss of the base blade; and (3) a step of modifying an aerofoil profile of the base blade in the position in the spanwise direction where the elevated portion is to be provided, from a base aerofoil profile to a modified aerofoil profile, the modified aerofoil profile is obtained by modifying, to a modified trailing edge portion curve, the trailing edge portion curve of the base aerofoil profile in the position in the spanwise direction where the elevated portion is to be provided, a portion of the modified trailing edge portion curve on a side of the suction side curve with the trailing edge as a boundary is formed to be a same curve as the trailing edge portion curve of the base aerofoil profile in the position in the spanwise direction where the elevated portion is to be provided and a portion of the modified trailing edge portion curve on a side of the pressure side curve is formed to be an elevated portion curve, and the elevated portion curve includes a concave front side curve and a convex rear side curve.

In the method for modifying a blade according to a second aspect of the present disclosure, the elevated portion has heights being distributed in the spanwise direction, and distribution of the heights in the spanwise direction is determined such that a height becomes maximum at a position in the spanwise direction where an outflow angle of a blade cascade is smaller than a designed value and becomes minimum and heights on both sides of the distribution smoothly decrease up to zero, the blade cascade being constituted of only the base blade parts alone.

### Explanation of Reference Signs

- A: Blade
- A_{B}: Base Blade (or Base Blade Portion)
- AF_{B}: Base Aerofoil Profile
- AF_{M}: Modified Aerofoil Profile
- EC: Elevated Portion Curve
- EP: Elevated Portion
- FC: Front Side Curve
- HR: Hub Region
- LC: Leading Edge Portion Curve
- PC: Pressure Side Curve
- PS: Pressure Side
- RC: Rear Side Curve
- SC: Suction Side Curve
- SS: Suction Side
- TC: Trailing Edge Portion Curve
- TC_{M}: Modified Trailing Edge Portion Curve
- TE: Trailing Edge
- TR: Tip Region

## Claims

1. A blade of a fan, a compressor, or a turbine of axial flow type, the blade comprising:
a base blade part; and
an elevated portion being provided on a pressure side in a vicinity of a trailing edge in at least either one of a hub region and a tip region of the base blade part, wherein
the base blade part has a base aerofoil profile being constituted of a leading edge portion curve, a trailing edge portion curve being an arc, and a concave pressure side curve and a convex suction side curve in respective positions in a spanwise direction, the concave pressure side curve and the convex suction side curve respectively extending between the leading edge portion curve and the trailing edge portion curve,
the blade has a base aerofoil profile in a position in the spanwise direction where the elevated portion is not provided, whereas the blade has a modified aerofoil profile in a position in the spanwise direction where the elevated portion is provided,
the modified aerofoil profile is constituted of the leading edge portion curve, the pressure side curve and the suction side curve of the base aerofoil profile in the position in the spanwise direction where the elevated portion is provided, and a modified trailing edge portion curve,
the modified trailing edge portion curve is constituted of a portion of the trailing edge portion curve of the base aerofoil profile in the position in the spanwise direction where the elevated portion is provided and an elevated portion curve, the portion being further on a side of the suction side curve than the trailing edge,
the elevated portion curve is constituted of a concave front side curve and a convex rear side curve, and
the rear side curve is a part of an ellipse or a circle, and the front side curve is a curve smoothly connecting the rear side curve and the pressure side curve.

2. The blade according to claim 1, wherein the rear side curve is
a part of an ellipse whose endpoint of a major axis is the trailing edge, whose major axis is orthogonal to a virtual straight line being tangent to the trailing edge portion curve of the base aerofoil profile at the trailing edge, and whose minor diameter is larger than a diameter of an arc constituting the trailing edge portion curve of the base aerofoil profile,
a part of an ellipse whose endpoint of a minor axis is the trailing edge, whose minor axis is orthogonal to a virtual straight line being tangent to the trailing edge portion curve of the base aerofoil profile at the trailing edge, and whose major diameter is larger than a diameter of an arc constituting the trailing edge portion curve of the base aerofoil profile, or
a part of a circle whose center is located on a straight line which passes through a center of an arc constituting the trailing edge portion curve of the base aerofoil profile and the trailing edge and whose diameter is larger than a diameter of the arc constituting the trailing edge portion curve of the base aerofoil profile.

3. The blade according to claim 1 or 2, wherein the elevated portion has heights being distributed in a spanwise direction such that a height among the heights becomes maximum at a position in the spanwise direction where an outflow angle of a blade cascade is smaller than a designed value and becomes minimum and heights on both sides of distribution of the heights smoothly decrease up to zero, the blade cascade being constituted of only the base blade parts alone.

4. The blade according to any one of claims 1 to 3, wherein the hub region is a region of 0 to 50% of an overall span of the base blade part as a distance from a hub side end portion of the base blade part, and the tip region is a region of 0 to 50% of the overall span of the base blade part as a distance from a tip side end portion of the base blade part.

5. A method for modifying a blade of a fan, a compressor, or a turbine of axial flow type, the method comprising:
(1) a step of determining a base blade being targeted for modification, the base blade having a base aerofoil profile being constituted of a leading edge portion curve, a trailing edge portion curve being an arc, and a concave pressure side curve and a convex suction side curve in respective positions in a spanwise direction, the concave pressure side curve and the convex suction side curve respectively extending between the leading edge portion curve and the trailing edge portion curve;
(2) a step of determining a position in the spanwise direction where an elevated portion is to be provided, the elevated portion being to be provided on a pressure side in a vicinity of a trailing edge in at least either one of a hub region and a tip region of the base blade in order to reduce a secondary flow loss of the base blade; and
(3) a step of modifying an aerofoil profile of the base blade in the position in the spanwise direction where the elevated portion is to be provided, from a base aerofoil profile to a modified aerofoil profile, wherein
the modified aerofoil profile is obtained by modifying, to a modified trailing edge portion curve, the trailing edge portion curve of the base aerofoil profile in the position in the spanwise direction where the elevated portion is to be provided,
a portion of the modified trailing edge portion curve on a side of the suction side curve with the trailing edge as a boundary is formed to be a same curve as the trailing edge portion curve of the base aerofoil profile in the position in the spanwise direction where the elevated portion is to be provided, and a portion of the modified trailing edge portion curve on a side of the pressure side curve is formed to be an elevated portion curve,
the elevated portion curve includes a concave front side curve and a convex rear side curve.

6. The method for modifying a blade according to claim 5, wherein the elevated portion has heights being distributed in the spanwise direction, and distribution of the heights in the spanwise direction is determined such that a height becomes maximum at a position in the spanwise direction where an outflow angle of a blade cascade is smaller than a designed value and becomes minimum and heights on both sides of the distribution smoothly decrease up to zero, the blade cascade being constituted of only the base blade alone.
